(19) Europäisches Patentamt
European Patent Office
Office européen des brevets

(11) **EP 1 746 448 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(51) Int Cl.:
***G02B 21/02*** *(2006.01)*

(21) Anmeldenummer: **06013006.9**

(22) Anmeldetag: **23.06.2006**

(54) **Mikroskopobjektiv**

Microscope objective lens

Objectif de microscope

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.07.2005 DE 102005034441**

(43) Veröffentlichungstag der Anmeldung:
**24.01.2007 Patentblatt 2007/04**

(73) Patentinhaber: **Carl Zeiss MicroImaging GmbH 07745 Jena (DE)**

(72) Erfinder:
• **Wolleschensky, Ralf Dipl.-Phys. 07743 Jena (DE)**
• **Dobschal, Hans-Jürgen 99510 Kleinromstedt (DE)**

(74) Vertreter: **Geyer, Fehners & Partner Patentanwälte Perhamerstrasse 31 80687 München (DE)**

(56) Entgegenhaltungen:
**DE-A1- 3 915 868          DE-A1- 19 959 228
DE-C1- 19 804 470          US-A- 4 155 622**

EP 1 746 448 B1

**Beschreibung**

Mikroskopobjektivsystem

Die Erfindung betrifft ein Mikroskopobjektiv system gemäß dem Oberbegriff des Anspruches 1, das beispielsweise in der Fluoreszenzmikroskopie, insbesondere für die 2-Photonen Mikroskopie, eingesetzt wird.

Bei Experimenten in der Fluoreszenzmikroskopie müssen beispielsweise bei der Untersuchung von Lebendpräparaten die Präparate temperiert werden. Um eine Temperatursenke zu vermeiden, wird neben der Probe auch das Mikroskopobjektiv mit erwärmt, so daß das Mikroskopobjektiv beispielsweise in einem Temperaturbereich von 20 bis 40°C eingesetzt wird. Nachdem Mikroskopobjektive häufig für einen sehr viel engeren Temperaturbereich ausgelegt sind, treten bei Temperaturen außerhalb des engen Temperaturbereichs beispielsweise sphärische Aberrationen auf, die die Auflösung verschlechtern.

Ferner werden in der Mikroskopie, insbesondere bei Laserscanningmikroskopen, häufig optische Schnitte in verschiedenen Tiefen der Probe durchgeführt. Dazu wird entweder die Probe entlang der optischen Achse des Mikroskopobjektivs oder das gesamte Mikroskopobjektiv bewegt. Dabei wird der Abstand zwischen der Frontlinse des Mikroskopobjektivs und der Probenoberfläche verändert, was bei hohen Fokussiergeschwindigkeiten zu mechanischen Vibrationen führen kann. Wenn das Mikroskop mit einem flüssigen Immersionsmedium betrieben wird, können diese Vibrationen nachteilig auf die Probe übertragen werden.

Die EP 1 548 482 A1 zeigt ein Mikroskopobjektivsystem gemäß dem Oberbegriff des Anspruches 1.

Die DE 199 59 228 A1 beschreibt ein Laser-Scanning-Mikroskop mit einem Temperatursensor, der beispielsweise auf der zur Schwingungsstabilisierung aus einer Granitplatte bestehenden Mikroskopunterlage positioniert ist. Damit kann die Temperatur der Umgebung des Laser-Scanning-Mikroskops gemessen werden, um die durch die thermische Ausdehnung des Stativs bewirkte Fokusverschiebung zu kompensieren.

Die DE 39 15 868 A1 beschreibt ein UV-taugliches Trockenobjektiv für Mikroskope, das zwei gegeneinander verschiebbare Linsenglieder aufweist. Das Trockenobjektiv ist bezüglich des Öffnungsfehlers sowohl im sichtbaren Spektralbereich als auch für eine UV-Wellenlänge korrigierbar, wobei die Korrektur für die UV-Wellenlänge durch Verschieben der Linsenglieder gezielt eingestellt wird.

Die US 4,155,622 betrifft ein Mikroskop mit Innenfokussierung, bei dem eine Änderung der Fokuslage ohne Änderung des Arbeitsabstandes möglich ist. Dazu weist das Objektiv des Mikroskops eine örtlich fixierte vordere Linsenanordnung sowie eine zweite entlang der optischen Achse bewegbaren Linsenanordnung auf.

Die DE 198 04 470 C1 betrifft ein Mikroskopobjektiv, das auf unterschiedliche Deckglasdicken eingestellt werden kann. Dazu ist eine Korrekturfassung vorgesehen, mit der eine axiale Verschiebung der in dieser Korrekturfassung gehalterten Linsengruppe ohne Drehung um die optische Achse und ohne Verkippung durchgeführt werden kann.

Ausgehend hiervon ist es Aufgabe der vorliegenden Erfindung, ein Mikroskopobjektivsystem der eingangs genannten Art so weiterzubilden, daß die beschriebenen Schwierigkeiten behoben werden können.

Erfindungsgemäß wird die Aufgabe bei einem Mikroskopobjektivsystem der eingangs genannten Art durch das Vorsehen der Merkmale des kennzeichnenden Teil des Anspruches 1 gelöst.

Bei dem erfindungsgemäßen Mikroskopobjektivsystem kann durch die Verschiebung des zumindest einen Optikelementes mittels der Stelleinrichtung die Fokuslage des Objektivs relativ zum Frontelement in Richtung der optischen Achse verschoben werden.

Durch die Änderung eines einzigen oder genau eines Abstands zwischen zwei benachbarten Elementen im Mikroskopobjektiv kann z. B. eine unerwünscht auftretende sphärische Aberration (Öffnungsfehler) zumindest teilweise kompensiert werden. Ein solcher Öffnungsfehler kann beispielsweise dann auftreten, wenn das Mikroskopobjektiv in einem Immersionsmikroskop eingesetzt wird und die Dicke des Immersionsmediums schwankt oder der Brechungsindex des Immersionsmediums aufgrund thermischer Änderungen verändert wird. Auch kann ein Ersetzen des Immersionsmediums mit einem Immersionsmedium einer anderen Art zu einem solchen unerwünschten Öffnungsfehler führen.

Durch die Änderung von mindestens zwei Abständen kann z. B. der Öffnungsfehler sehr gut kompensiert werden. Ferner kann die Fokuslage des Mikroskopobjektivs relativ zum Frontelement des Mikroskopobjektivs geändert werden. In diesem Fall können, wenn das Mikroskopobjektivsystem in einem Mikroskop verwendet wird, somit optische Schnitte in verschiedenen Tiefen der Probe durchgeführt werden. Vorteilhaft wird dies erreicht unter Beibehaltung des Abstandes der Frontlinse zur Probenoberfläche und somit des Arbeitsabstandes. Die sich herkömmlicher Weise ergebenden Schwierigkeiten aufgrund der Änderung des Arbeitsabstandes (beispielsweise mechanische Schwingungen) können somit vollständig vermieden werden. Unter Arbeitsabstand wird hier der Abstand der Frontlinse zur Probenoberfläche verstanden. Des weiteren müssen nur einige Elemente des Mikroskopobjektivs und nicht das gesamte Mikroskopobjektiv bewegt werden, um die gewünschte Fokussierung zu erreichen.

Die Änderung von mindestens zwei Abständen im Mikroskopobjektiv kann vorteilhaft auch dazu benutzt werden, eine temperaturbedingte sphärische Aberration zu kompensieren. Damit kann der Einsatzbereich des Mikroskopobjektivs für deutlich größere Temperaturbereiche im Vergleich zu herkömmlichen Objektiven realisiert werden.

Bevorzugt werden mittels der Stelleinrichtung zwei oder mehr Abstände von benachbarten Elementen geändert. Insbesondere wird die Änderung so durchgeführt, daß die Abstände voneinander unabhängig änderbar bzw. einstellbar sind.

Die Stelleinrichtung kann ein oder mehrere Stellelemente aufweisen. Als Stellelemente können beispielsweise Pieztielemente eingesetzt werden.

Erfindungsgemäß wird die Änderung des Abstands gesteuert durchgeführt, wobei die Steuereinrichtung vorgesehen ist , mit der die Stelleinrichtung entsprechend angesteuert werden kann. Bei der Steuereinrichtung kann es sich insbesondere um die Steuereinrichtung des Mikroskops handeln, in dem das Mikroskopobjektiv eingesetzt wird.

Der Temperatursensor kann die Temperatur der zu untersuchenden Probe und/oder des Mikroskopobjektivs laufend messen und an die Steuereinrichtung weitergeben..

Das optische Frontelement des Mikroskopobjektivs (also das Element, dessen Abstand zur Probe bei Verwendung des Mikroskopobjektivs am geringsten ist) kann beispielsweise eine Linse sein und kann insbesondere so im Mikroskopobjektiv angeordnet sein, daß es in Richtung der optischen Achse des Mikroskopobjektivs nicht verschiebbar ist.

Das erfindungsgemäße Mikroskopobjektivsystem wird bevorzugt in einem Mikroskop, insbesondere einem Fluoreszenzmikroskop oder einem 2-Photonen-Mikroskop verwendet. In diesem Fall wird ein Mikroskop bereitgestellt, das die Vorteile des Mikroskopobjektivsystems nutzen kann. Das Mikroskop kann beispielsweise ein Immersionsmikroskop und/oder ein Laserscanningmikroskop sein. Ferner kann das Mikroskop ein Steuermodul aufweisen, das die Stelleinrichtung des Mikroskopobjektivs ansteuert. Insbesondere kann das Steuermodul so ausgebildet sein, daß mit dem Mikroskop das nachfolgend beschriebene Mikroskopierverfahren und seine beschriebenen Weiterbildungen durchgeführt werden können.

Ferner wird ein Mikroskopierverfahren bereitgestellt, bei dem ein Mikroskopobjektiv mit einem optischen Frontelement und mehreren vom Frontelement und voneinander beabstandeten Optikelementen eingesetzt wird, wobei zur Kompensation eines temperaturbedingten Abbildungsfehlers die Temperatur des Mikroskopobjektivs und/oder der zu untersuchenden Probe gemessen und mindestens ein Optikelement entlang der optischen Achse in Abhängigkeit der gemessenen Temperatur verschoben wird. Durch diese Verschiebung kann zumindest ein Abstand zwischen den voneinander beabstandeten Elementen gezielt verändert bzw. eingestellt werden, so daß die gewünschte Kompensation des temperaturbedingten Abbildungsfehlers (beispielsweise eine temperaturbedingte sphärische Aberration) durchgeführt werden kann.

Bei dem erfindungsgemäßen Mikroskopierverfahren kann ferner das mindestens eine Optikelement zur Änderung der Fokuslage relativ zum Frontelement in Richtung der optischen Achse des Mikroskopobjektivs verschoben werden. Damit kann eine gewünschte Änderung bzw. Einstellung der Fokuslage durchgeführt werden.

Insbesondere kann dadurch die Fokuslage verändert werden, um optische Schnitte in verschiedenen Tiefen der Probe durchzuführen. Da dazu das Frontelement nicht bewegt werden muß, bleibt der Arbeitsabstand beim Mikroskopieren konstant, so daß die Schwierigkeiten vermieden werden können, die sich bei einem herkömmlichen Vorgehen mit Änderung des Arbeitsabstandes insbesondere bei der Verwendung von Immersionsmedien einstellen.

Es ist daher vorteilhaft, daß das mindestens eine Optiketement derart verschoben wird, daß die Kompensation des Abbildungsfehlers und/oder die Änderung der Fokuslage bei unverändertem Arbeitsabstand erfolgt.

Insbesondere kann die Änderung der Fokuslage gemäß einem vorgegebenen Tiefenprofil durchgeführt werden. Dabei kann es sich beispielsweise um ein periodisches Tiefenprofil oder ein sonstiges vorgegebenes Tiefenprofil handeln. Bei dem Verfahren wird dann dieses Tiefenprofil abgefahren (d.h. die Fokuslage wird entsprechend dem Tiefenprofil geändert), so daß bei unterschiedlichen Proben die optischen Schnitte aus gleichen Tiefen erzielt werden können (es werden also Mikroskopaufnahmen jeweils aus gleichen Tiefen in unterschiedlichen Proben durchgeführt).

Bei dem Verfahren wird das mindestens eine Optikelement derart verschoben, daß zwei oder mehr Abstände der voneinander beabstandeten Optikelemente voneinander unabhängig verändert werden. Insbesondere kann man durch eine unabhängige Änderung von genau zwei Abständen eine ausgezeichnete Verschiebung der Fokuslage bei gleichzeitig Vernachlässigbaren (durch die Verschiebung bedingten) Aberrationen erreichen.

Die Erfindung wird nachfolgend beispielshalber anhand der Figuren noch näher erläutert. Es zeigen:

Fig. 1     eine schematische Ansicht einer Ausführungsform des erfindungsgemäßen Mikroskopobjektivsystems in einem Mikroskop, und

Fig. 2     ein Linsenschnitt des Mikroskopobjektivsystems von Fig. 1 mit eingezeichnetem Detektions-Strahlenverlauf des Objektivs.

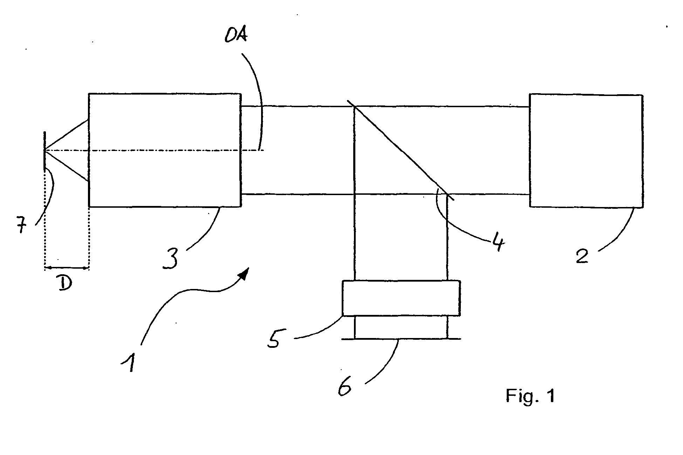

Das in Fig. 1 schematisch dargestellte Mikroskop umfaßt ein Mikroskopobjektivsystem 1 und eine Beleuchtungsquelle 2, die hier elektroniagnetische Strahlung mit einer VIIellenlänge von 700 - 1100 nm abgeben kann.

Das Mikroskopobjektivsystem 1 umfaßt ein Objektiv 3, einen Farbteiler 4, eine Detektoroptik 5 sowie einen Flächendetektor 6, der einen kreisförmigen Detektiohsbereich mit einem Durchmesser ca. 10 mm aufweist. Der Farbteiler 4 ist so ausgelegt, daß er die elektromagnetische Strahlung der Quelle 2 transmittiert und zu detektierende Strahlung, die von dem Objekt bzw. der Probe 7 kommt und in einem Wellenlängenbereich von 400 - 700 nm liegt, reflektiert.

Im Betrieb wird die Strahlung der Quelle 2 vom Farbteiler 4 transmittiert und über das Objektiv 3 auf die Probe 7 fokussiert. Die detektierte, von der Probe kommende Strahlung läuft durch das Objektiv 3, wird am Farbteiler 4 zur Detektoroptik 5 reflektiert und von diesen auf den Detektor 6 gelenkt.

Bei dem hier beschriebenen Mikroskopobjektivsystem ist das Objektiv ein Immersionsobjektiv, wobei als Immersionsflüssigkeit Wasser verwendet wird. Der Arbeitsabstand D zwischen dem Objektiv 3 und der Probe 7 beträgt 2,11 mm und die Apertur beträgt 0,8.

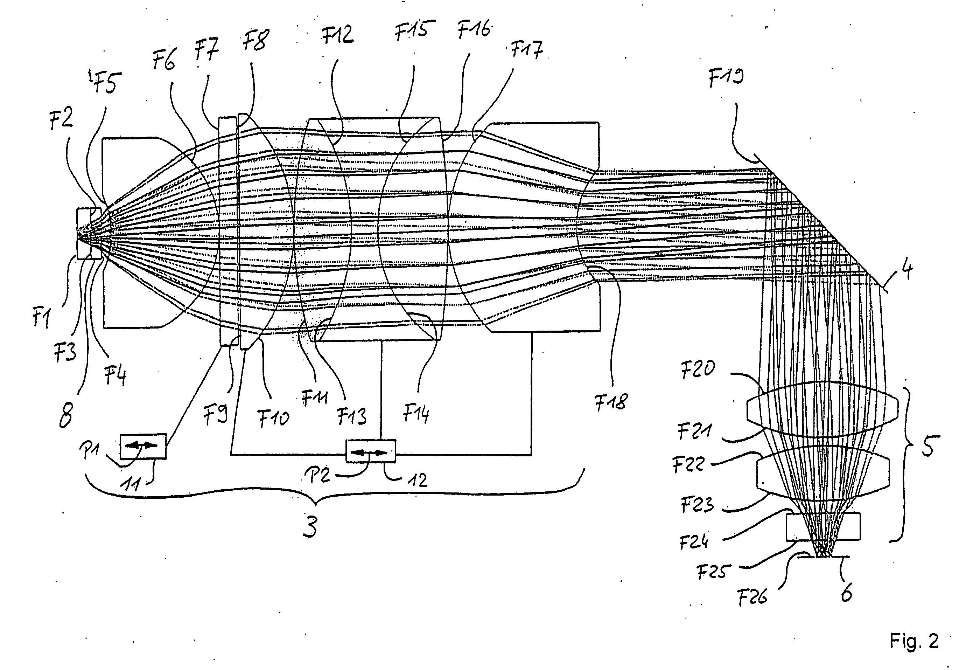

In der Lirisenschnittdarstellung von Fig. 2 ist der Strahlengang für Detektionsstrahlung dargestellt, die auf den Detektor 6 gelenkt wird. Dieser Strahlengang entspricht vom Farbteiler 4 bis hin zur Probe 7 auch dem Beleuchtungsstrahlengang für das Licht der Quelle 2.

Der genaue optische Aufbau des Objektivs 3 und der Detektoroptik ist in den nachfolgenden Tabellen angegeben:

**Tabelle 1:**

| Fläche - Fläche | Abstand [mm] | Material |
|---|---|---|
| F1- F2 | 2,0 | Wasser |
| F2 - F3 | 0,00 | |
| F3 - F4 | 0,80 | Suprasil |
| F4 - F5 | 0,98 | Gas (z.B. Luft) |
| F5 - F6 | 17,37 | N-LASF31 |
| F6 - F7 | 0,36 | Gas (z.B. Luft) |
| F7 - F8 | 2,50 | Suprasil |
| F8 - F9 | 0,99 | Gas (z.B. Luft) |
| F9 - F10 | 6,86 | PSK3 |
| F10 - F11 | 0,05 | Gas (z.B. Luft) |
| F11 - F12 | 9,47 | FK5 |
| F12 - F13 | 0,00 | Kitt |
| F13 - F14 | 4,00 | SF5 |
| F14 - F15 | 0,00 | Kitt |
| F15 - F16 | 8,36 | N-BaLF5 |
| F16 - F17 | 0,05 | Gas (z.B. Luft) |
| F17 - F18 | 17,46 | N-LAK8 |
| F18 - F19 | 37,42 | Gas (z. B. Luft) |
| F19 - F20 | 23,00 | Gas (z. B. Luft) |
| F20 - F21 | 8,00 | N-BK7 |
| F21 - F22 | 1,20 | Gas (z. B. Luft) |
| F22 - F23 | 8,00 | N-BK7 |
| F23 - F24 | 2,00 | Gas (z. B. Luft) |
| F24 - F25 | 4,00 | Filter |
| F25 - F26 | 2,50 | Gas (z. B. Luft) |

**Tabelle 2:**

| Fläche | Krümmungsradius [mm] | Flächentyp |
|--------|----------------------|------------|
| F1 | unendlich | Planfläche |
| F2 | unendlich | Planfläche |
| F3 | unendlich | Planfläche |
| F4 | unendlich | Planfläche |
| F5 | - 14,236 | konkave Fläche |
| F6 | - 14,495 | konvexe Fläche |
| F7 | unendlich | Planfläche |
| F8 | unendlich | Planfläche |
| F9 | unendlich | Planfläche |
| F10 | - 26,120 | konvexe Fläche |
| F11 | 42,398 | konvexe Fläche |
| F12 | -24,357 | konvexe Fläche |
| F13 | - 24,357 | konkave Fläche |
| F14 | 18,042 | konkave Fläche |
| F15 | 18,042 | konvexe Fläche |
| F16 | - 312,96 | konvexe Fläche |
| F17 | 19,022 | konvexe Fläche |
| F18 | 11,170 | konkave Fläche |
| F19 | unendlich | Planfläche |
| F20 | 25,851 | konvexe Fläche |
| F21 | 25,851 | konvexe Fläche |
| F22 | 25,851 | konvexe Fläche |
| F23 | 25,851 | konvexe Fläche |
| F24 | unendlich | Planfläche |
| F25 | unendlich | Planfläche |
| F26 | unendlich | Planfläche |

Die Flächen F12 + F13 sowie F14 + F15 sind jeweils miteinander verkittet. Bei dem Element mit den Flächen F 24 und F25 handelt es sich um einen Emissionsfilter.

Die Fläche F7 ist als diffraktive Fläche ausgebildet, die durch das folgende Phasenpolynom P(r) beschrieben werden kann

$$P(r) := \sum_{i=1}^{5} a_i \cdot r^{2 \cdot i}$$

wobei $a1 = 2,6647 \times 10^{-4}$, $a2 = 3,985 \times 10^{-7}$, $a3 = 1,3929 \times 10^{-9}$, $a4 = -3,1751 \times 10^{-13}$, $a5 = - 3,7438 \times 10^{-17}$. und r der radiale Abstand ist. Das Phasenpolynom P(r) gibt die Phasenverschiebung in Abhängigkeit vom radialen Abstand r an und aus der Ableitung des Phasenpolynoms nach dem radialen Abstands r läßt sich die Gitterfrequenz des diffraktiven Elements berechnen.

In Fig. 2 sind noch schematisch zwei Stellelemente 11 und 12 gezeigt, die zusammen eine Stelleinrichtung bilden. Mittels dem Stellelement 11 kann, wie durch den Doppelpfeil P1 angedeutet ist, das Element mit den Flächen F7 und F8 entlang der optischen Achse OA des Otijektivs 3 bewegt werden. In gleicher Weise kann mittels dem Stellelement 12, wie durch den Doppelpfeil P2 angedeutet ist, die Gruppe der Optikelemente mit den Flächen F9 - F18 zusammen in Richtung der optischen Achse des Objektivs 3 bewegt werden. Damit ist es möglich, mittels der Stellelemente 11 und 12 den Abstand zwischen den Flächen F6 und F7 und den Abstand zwischen den Flächen F8 und F9 unabhängig voneinander einzustellen. Dies kann dazu genutzt werden, um die Fokuslage entlang der optischen Achse zu verändern, ohne den Arbeitsabstand D zu verändern, so daß optische Schnitte in verschiedenen Tiefen der Probe durchgeführt werden können. Da der Arbeitsabstand D dazu nicht geändert werden muß führt dies nicht zu ansonsten nachteilig auftretenden Schwigungen und Kraftübertragungen auf die Probe über die Immersionsflüssigkeit, die bei herkömmlicher Fokussierung aufgrund der Bewegung eines Probentisches und/oder des Objektivs und somit aufgrund der Änderung des Arbeitsabstands auftreten würde.

Die notwendige Änderung der Abstände zwischen den Flächen F6 und F7 sowie zwischen den Flächen F8 und F9 für einen Defokussierungsbereich von +/- 0,1 mm ist in der nachfolgenden Tabelle 3 angegeben.

**Tabelle 3:**

| Defokussierung [mm] | Änderung Abstand F6-F7 [mm] | Änderung Abstand F8-F9 [mm] |
|---|---|---|
| - 0,1 | -0,16 | 0,85 |
| - 0,08 | - 0,12 | 0,68 |
| - 0,06 | - 0,09 | 0,51 |
| - 0,04 | - 0,06 | 0,34 |
| - 0,02 | - 0,03 | 0,17 |
| 0,0 | 0,0 | 0,0 |
| 0,02 | 0,03 | - 0,17 |
| 0,04 | 0,06 | - 0,34 |
| 0,06 | 0,09 | - 0,51 |
| 0,08 | 0,12 | - 0,68 |
| 0,10 | 0,15 | - 0,85 |

Ferner ist es möglich, durch Änderung der Abstände F6 - F7 sowie F8 - F9 eine Temperaturkompensation von Bildfehlern in einem Temperaturbereich von beispielsweise von 20 bis 40°C zu erreichen. Wenn das Objektiv 3 für eine Temperatur von 20°C ausgelegt ist, muß bei einer Betriebstemperatur von 30°C der Abstand F6 - F7 um -0,0324 mm und der Abstand F8 - F9 um 0,0109 mm geändert werden. Bei einer Temperatur von 40°C beträgt die Änderung des Abstandes F6 - F7 -0,0658 mm und die Änderung des Abstandes F8 - F9 0,0231 mm.

Als Stellelemente 11 und 12 können beispielsweise Piezostellelemente oder sonstige Stellelemente verwendet werden, die die gewünschte Genauigkeit zur Verschiebung der Elemente aufweisen.

Insbesondere ist noch ein Temperatursensor (nicht gezeigt) vorgesehen, der laufend die Temperatur des Objektivs 3 mißt und diese an eine (nicht gezeigte) Steuereinrichtung weitergibt. Die Steuereinrichtung steuert in Abhängigkeit der gemessenen Temperatur die Stellelemente 11 und 12 an. Eine solche Steuereinrichtung kann natürlich auch dazu verwendet werden, um die Fokuslage in der oben beschriebenen Art zu ändern.

Bei dem in Fig. 1 gezeigten Mikroskop kann beispielsweise noch eine Ablenkeinheit zwischen dem Objektiv 3 und dem Farbteiler 4 angeordnet sein, so daß das Mikroskop dann als Laserscanningmikroskop ausgebildet ist. Die Detektoroptik 5 kann auch weggelassen werden.

**Patentansprüche**

1.  Mikroskopobjektivsystem mit einem Mikroskopobjektiv (3), das ein optisches Frontelement (8), mehrere vom Frontelement (8) und voneinander beabstandete Optikelemente sowie eine Stelleinrichtung (11, 12) aufweist, wobei mittels der Stelleinrichtung (11, 12) zumindest eines der Optikelemente entlang der optischen Achse (OA) verschiebbar ist, **gekennzeichnet durch**
    eine Steuereinrichtung und einen Temperatursensor, der die Temperatur des Mikroskopobjektivs (3) und/oder einer mit dem Mikroskopobjektiv (3) zu untersuchenden Probe mißt und an die Steuereinrichtung weitergibt, die in Abhängigkeit der Meßergebnisse die Stelleinrichtung (11, 12) ansteuert,die daraufhin zumindest einen Abstand der voneinander beabstandeten Elemente in Abhängigkeit der Temperatur des Objektivs (3) so verändert, daß ein temperaturbedingter Abbildungsfehler des Objektivs (3) kompensiert wird.

**2.** Mikroskopobjektivsystem nach Anspruch 1, **dadurch gekennzeichnet, daß** die Stelleinrichtung (11, 12) durch das Verschieben des zumindest einen Optikelements genau einen Abstand der voneinander beabstandeten Elemente ändert.

**3.** Mikroskopobjektivsystem nach einem der obigen Ansprüche, **dadurch gekennzeichnet, daß** mittels der Stelleinrichtung (11, 12) zwei Abstände der voneinander beabstandeten Elemente voneinander unabhängig verändert werden.

**4.** Mikroskopobjektivsystem nach einem der obigen Ansprüche, **dadurch gekennzeichnet, daß** durch die Verschiebung des zumindest einen Optikelementes mittels der Stelleinrichtung (11, 12) die Fokuslage des Objektivs (3) relativ zum Frontelement (8) in Richtung der optischen Achse (OA) verschoben wird.

**5.** Verwendung eines Mikroskopobjektivsystems nach einem der obigen Ansprüche bei einem Mikroskop, insbesondere bei einem Fluoreszenzmikroskop oder einem 2-Photonen-Mikroskop.

**6.** Mikroskopierverfahren, bei dem ein Mikroskopobjektiv nach Anspruch 1 eingesetzt wird, wobei zur Kompensation eines temperaturbedingten Abbildungsfehlers die Temperatur des Mikroskopobjektivs und/oder der zu untersuchenden Probe gemessen und mindestens ein Optikelement entlang der optischen Achse in Abhängigkeit der gemessenen Temperatur verschoben wird.

**7.** Verfahren nach Anspruch 6, **dadurch gekennzeichnet, daß** das mindestens eine Optikelement derart verschoben wird, daß zumindest ein Abstand zwischen zwei benachbarten Elementen verändert wird.

**8.** Verfahren nach Anspruch 6 oder 7, **dadurch gekennzeichnet, daß** das mindestens eine Optikelement zur Änderung der Fokuslage relativ zum Frontelement in Richtung der optischen Achse des Mikroskopobjektivs verschoben wird.

**9.** Verfahren nach Anspruch 8, **dadurch gekennzeichnet, daß** die Fokuslage verändert wird, um optische Schnitte in verschiedenen Tiefen der Proben durchzuführen.

**10.** Verfahren nach Anspruch 8 oder 9, **dadurch gekennzeichnet, daß** die Änderung der Fokuslage gemäß einem vorgegebenen Tiefenprofil durchgeführt wird.

**11.** Verfahren nach einem der Ansprüche 6 bis 10, **dadurch gekennzeichnet, daß** das mindestens eine Optikelement derart verschoben wird, daß die Kompensation des Abbildungsfehlers und/oder die Änderung der Fokuslage bei unverändertem Arbeitsabstand des Mikroskopobjektivs erfolgt.

**12.** Verfahren nach einem der Ansprüche 6 bis 11, **dadurch gekennzeichnet, daß** das mindestens eine Optikelement derart verschoben wird, daß zwei Abstände der voneinander beabstandeten Optikelemente voneinander unabhängig verändert werden.

## Claims

**1.** A microscope objective system having a microscope objective (3) comprising an optical front element (8), a plurality of optical elements spaced apart from the front element (8) and from each other, as well as an adjusting unit (11, 12), wherein at least one of said optical elements can be displaced along the optical axis (OA) by means of the adjusting unit (11, 12), **characterized by**
a control unit and a temperature sensor which measures the temperature of the microscope objective (3) and/or of a sample to be examined with the microscope objective (3) and transmits it to the control unit which controls the adjusting unit (11, 12) according to the measurement results, as a result thereof the adjusting unit modifies at least one distance of the spaced-apart elements as a function of the temperature of the objective (3) such that a temperature-induced imaging error of the objective (3) is compensated for.

**2.** The microscope objective system as claimed in Claim 1, **characterized in that** the adjusting unit (11, 12) modifies exactly one distance of the spaced apart elements by displacement of the at least one optical element.

3. The microscope objective system as claimed in any one of the above Claims, **characterized in that** two distances of the spaced-apart elements are independently modified by means of the adjusting unit (11, 12).

4. The microscope objective system as claimed in any one of the above claims, **characterized in that** the focal position of the objective (3) is displaced relative to the front element (8) in the direction of the optical axis (OA) by the displacement of the at least one optical element by the adjusting unit (11, 12).

5. The use of a microscope objective system as claimed in any one of the above Claims in a microscope, in particular in a fluorescence microscope or a 2-photon microscope.

6. A microscopy method, which uses a microscope objective according to Claim 1, wherein, in order to compensate for a temperature-induced imaging error the temperature of the microscope objective and/or the sample to be examined is measured and at least one optical element is displaced along the optical axis according to the measured temperature.

7. The method as claimed in Claim 6, **characterized in that** the at least one optical element is displaced such that at least one distance between two adjacent elements is modified.

8. The method as claimed in Claim 6 or 7, **characterized in that** the at least one optical element is displaced relative to the front element in the direction of the optical axis of the microscope objective in order to modify the focal position.

9. The method as claimed in Claim 8, **characterized in that** the focal position is modified in order to effect optical sections at different depths of the samples.

10. The method as claimed in Claim 8 to 9, **characterized in that** the modification of the focal position is effected according to a predetermined depth profile.

11. The method as claimed in any one of Claims 6 to 10, **characterized in that** the at least one optical element is displaced such that the compensation of the imaging error and/or the modification of the focal position is effected with the working distance of the microscope objective remaining unmodified.

12. The method as claimed in any one of Claims 6 to 11, **characterized in that** the at least one optical element is displaced such that two distances of the spaced-apart optical elements are independently modified.

**Revendications**

1. Système d'objectif de microscope avec un objectif du microscope (3), qui comporte un élément frontal (8) optique, plusieurs éléments optiques situés à distance de l'élément frontal (8) et les uns des autres, ainsi qu'un dispositif de réglage (11, 12), sachant qu'au moins l'un des éléments optiques peut être déplacé le long de l'axe optique (OA) au moyen du dispositif de réglage (11, 12),
   **caractérisé par**
   un dispositif de commande et un capteur de température, qui mesure la température de l'objectif du microscope (3) et/ou d'un échantillon à examiner avec l'objectif du microscope (3) et transmet cette mesure au dispositif de commande qui, en fonction des résultats de mesure, actionne le dispositif de réglage (11, 12) qui, à la suite de cela, modifie au moins une distance entre les éléments écartés les uns des autres en fonction de la température de l'objectif (3), de manière à compenser une erreur de reproduction de l'objectif (3) due à la température.

2. Système d'objectif de microscope selon la revendication 1, **caractérisé en ce que**, par le déplacement dudit au moins un élément optique, le dispositif de réglage (11, 12) modifie exactement une distance entre les éléments écartés les uns des autres.

3. Système d'objectif de microscope selon l'une quelconque des revendications précédentes, **caractérisé en ce que** deux distances entre les éléments écartés les uns des autres peuvent être modifiées indépendamment l'une de l'autre au moyen du dispositif de réglage (11, 12).

4. Système d'objectif de microscope selon l'une quelconque des revendications précédentes, **caractérisé en ce que**, par le déplacement dudit au moins un élément optique au moyen du dispositif de réglage (11, 12), la position focale de l'objectif (3) est décalée par rapport à l'élément frontal (8) dans la direction de l'axe optique (OA).

5. Utilisation d'un système d'objectif de microscope selon l'une quelconque des revendications précédentes avec un microscope, en particulier avec un microscope à fluorescence ou un microscope à 2 photons.

6. Procédé de microscopie, dans lequel est utilisé un objectif du microscope selon la revendication 1, sachant que pour compenser une erreur de reproduction due à la température, la température de l'objectif du microscope et/ou de l'échantillon à examiner est mesurée et au moins un élément optique est déplacé le long de l'axe optique en fonction de la température mesurée.

7. Procédé selon la revendication 6, **caractérisé en ce que** ledit au moins un élément optique est déplacé de telle sorte qu'au moins une distance entre deux éléments voisins est modifiée.

8. Procédé selon la revendication 6 ou 7, **caractérisé en ce que** pour modifier la position focale, ledit au moins un élément optique est déplacé par rapport à l'élément frontal dans la direction de l'axe optique de l'objectif du microscope.

9. Procédé selon la revendication 8, **caractérisé en ce que** la position focale est modifiée pour effectuer des coupes optiques dans différentes profondeurs des échantillons.

10. Procédé selon la revendication 8 ou 9, **caractérisé en ce que** la variation de la position focale est effectuée selon un profil de profondeur prédéfini.

11. Procédé selon l'une quelconque des revendications 6 à 10, **caractérisé en ce que** ledit au moins un élément optique est déplacé de telle sorte que la compensation de l'erreur de reproduction et/ou la variation de la position focale sont effectuées sans que soit modifiée la distance de travail de l'objectif du microscope.

12. Procédé selon l'une quelconque des revendications 6 à 11, **caractérisé en ce que** ledit au moins un élément optique est déplacé de telle sorte que deux distances entre les éléments optiques écartés les uns des autres sont modifiées indépendamment l'une de l'autre.

DA

7

D

3

1

5

6

4

2

Fig. 1

EP 1 746 448 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1548482 A1
- DE 19959228 A1
- DE 3915868 A1
- US 4155622 A
- DE 19804470 C1